# EUROPEAN PATENT SPECIFICATION

(11) **EP 1 374 046 B1**
(45) Date of publication and mention of the grant of the patent: **22.02.2012**
(21) Application number: 02709187.5
(22) Date of filing: 25.01.2002
(51) Int. Cl.: G06F 9/45

(54) **SYSTEM AND METHOD FOR TRANSFORMING OBJECT CODE**
SYSTEM UND VERFAHREN ZUM TRANSFORMIEREN VON OBJEKTKODES
SYSTEME ET PROCEDE DE TRANSFORMATION DE CODE D'OBJETS

(30) Priority: 23.02.2001 US 792551; 02.05.2001 US 848384
(43) Date of publication of application: 02.01.2004
(73) Proprietor: Microsoft Corporation, Redmond, Washington 98052 (US)
(72) Inventor: SWETLAND, Brian, Mountain View, CA 94041 (US)
(74) Representative: Lippich, Wolfgang
(86) International application number: PCT/US2002/002316
(87) International publication number: WO 2002/069138

(56) References cited:
- EP-A- 0 913 769
- WO-A-99/31576
- US-A- 5 966 542
- US-A- 5 999 737
- PAINCHAUD F ET AL: "On the implementation of a stand-alone Javabytecode verifier" ENABLING TECHNOLOGIES: INFRASTRUCTURE FOR COLLABORATIVE ENTERPRISES, 2000. (WET ICE 2000). PROEEDINGS. IEEE 9TH INTERNATIONAL WORKSHOPS ON GAITHERSBURG, MD, USA 14-16 JUNE 2000, LOS ALAMITOS, CA, USA,IEEE COMPUT. SOC, US, 14 June 2000 (2000-06-14), pages 189-194, XP010522934 ISBN: 0-7695-0798-0
- GLOSSNER J ET AL: "Delft-Java link translation buffer" EUROMICRO CONFERENCE, 1998. PROCEEDINGS. 24TH VASTERAS, SWEDEN 25-27 AUG. 1998, LOS ALAMITOS, CA, USA,IEEE COMPUT. SOC, US, 25 August 1998 (1998-08-25), pages 221-228, XP010298075 ISBN: 0-8186-8646-4

## Description

### BACKGROUND OF THE INVENTION

### Field of the Invention

This invention relates generally to the field of computer programming. More particularly, the invention relates to a system and method for transforming object-oriented program code.

### Description of the Related Art

Java is an object-oriented programming language which is used to design computer programs which are platform-independent. That is, the same Java object code may be used on numerous different operating systems including, for example, Windows 95, Unix, Solaris, and the Macintosh OS. This interoperability makes Java an ideal choice for programming Internet applications.

Once a program is written in Java source code, the Java compiler generates a compact, architecture-neutral object code (commonly referred to as known as Java bytecode) which may be executed by a runtime interpreter residing on the client computer. This runtime interpreter is commonly referred to as a Java "virtual machine." The Java virtual machine interprets the object code so that the instructions may be executed by the client's native microprocessor. Virtual machines are included in commonly available Internet browser applications such as Netscape Navigator^{™} or Microsoft Internet Explorer. ^{™}

Java was derived from the popular C++ programming language and retained many significant features of that language. For example, Java, like C++, is object-oriented. Accordingly, Java programs are developed around "classes" and "objects." These two terms are not interchangeable but they are directly related to one another. A class can be thought of as a template or blueprint from which an object is made. An object may contain some number of "fields" in which data (such as integers, strings of characters, or references to other objects) may be stored. A class defines a number of actions ("methods") which may operate on the object and are either implemented in bytecode, linked to native code, or abstract. Every object is an "instance" of some specific class - containing the described fields an may be operated upon by the described methods.

A "class file" is a binary object that describes a single class - all the fields, methods, objects code of those methods, etc. The format of class files is described in detail by chapter four of "The Java Virtual Machine Specification" (ISBN 0-201-43294-3). The basic layout of a class file shall be described below.

US 5,966,542 describes a method and system in which an executable module, such as Java classes, is stored in a read-only memory. A static class loader identifies methods that contain unresolved symbolic references and data that varies during the execution of the module. These methods and data are identified in order to place them in the address space that resides in a random access memory. By utilizing a read-only memory to store statically loadable classes, the random access memory is left available for other uses. To reduce the amount of read-only memory used constants from the different classes are combined in a constant pool, in two segments. In a first segment of the constant pool containing at most 256 constants, the constants are referenced by 8-bit operands, and in the second segment, the constants are referenced by two 8-bit operands (col. 6, lines 10-33).

Programmers typically combine groups of ready-made class files, referred to as "class libraries," for writing programs. For example, a class library is typically available for providing graphical user interface ("GUI") functions such as windowing routines, buttons, scroll bars and other graphical features.

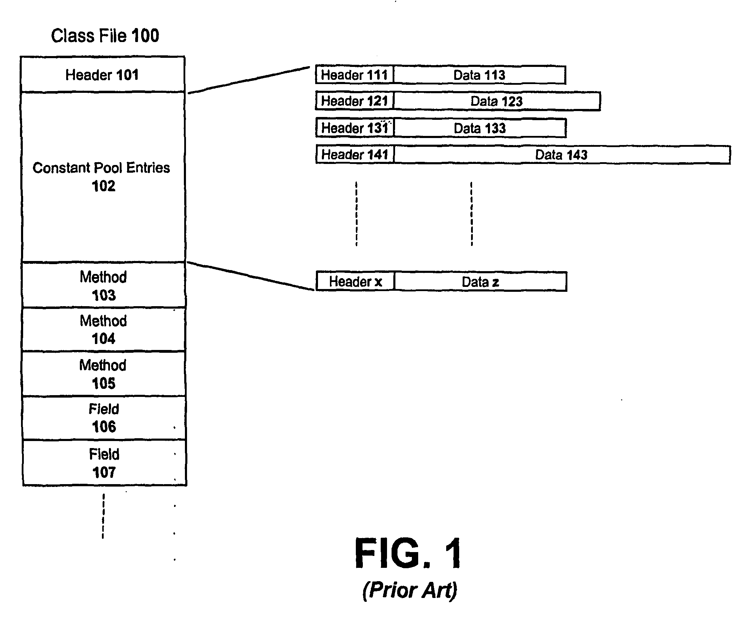

As illustrated in **Figure 1**, an exemplary class file 100 is comprised of a header 101, a plurality of constant pool entries 102, and one or more methods 103-105 and/or fields 106, 107. The header 101 contains data for identifying a class file as a class file (e.g., the revision information). The constant pool entries 102 are each comprised of a header portion (a single byte "tag") 111, 121, 131, 141, and a variable length data portion 113, 123, 133, 143, respectively. The header portion 111, 121, 131, 141 indicates the type of constant pool entry. According to the specification, entries may be of the type Class, FieldRef, Methodref, InterfaceMethodref, String, Integer, Float, Long, Double, NameAndType, or Utf8. The data portion 113, 123, 133, 143 contains the actual constant pool information associated with the entry. The Utf8, Integer, Float, Long, and Double types encapsulate simple constant data as implied by their names. The other types contain references (by one-based index) to other entries. For example, a Methodref refers to a Class entry and a NameAndType entry, identifying a specific method of a specific class.

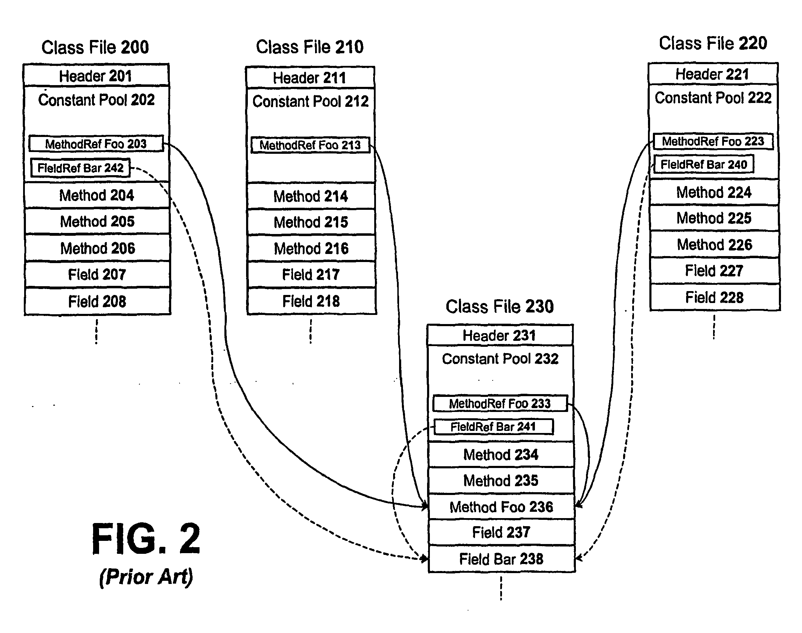

For example, as illustrated in **Figure 2**, class files 200, 210 and 220 each contain constant pool entries which refer to methods and fields provided by class file 230. More specifically, class files 200, 210 and 220 include "MethodRef Foo" entries 203, 213 and 223, respectively, in their constant pools 202, 212, and 222 which refer to the method Foo 236 of class 230. In addition, class file 230 itself includes a "MethodRef Foo" entry in its constant pool 232 which refers to method Foo 236. Similarly, the constant pools of class files 200, 220 and 230 each include a "FieldRef Bar" entry which refer to field Bar 238 in class file 230.

Accordingly, when each of the foregoing class files are used in a program (e.g., a Java applet or application), three redundant constant pool entries referring to field Bar 238 are loaded into memory (i.e., FieldRef entries 240, 241, and 242) and four redundant constant pool entries referring to method Foo 236 are loaded into memory (i.e., MethodRef entries 203, 213, 223, 233). Considering the fact that a program may utilize scores of class files and that each class file may contain hundreds, or even thousands, of constant pool entries, a significant amount of memory may be consumed by redundant information.

Accordingly, what is needed is a system and method for reducing the memory requirements for object-oriented programs.

### SUMMARY

A method implemented on a computer for combining a plurality of classfiles into a unified classfile bundle that includes the methods and fields of the original classfiles. The method includes:
copying the methods of the original classfiles into the unified classfile bundle, thereby generating a global method entry within the unified classfile bundle for each method within the plurality of classfiles;
copying the fields of the original classfiles into the unified classfile bundle, thereby generating a global field entry within the unified classfile bundle for each field within the plurality of classfiles; and
converting local constant pool entries from local constant pools of each of the plurality of classfiles which reference methods and fields of each classfile into global constant pool entries within the unified classfile bundle, wherein converting comprises removing redundant local constant pool entries and replacing the references pointing from the local constant pool entries to methods and fields with offset values provided in slots, that are assigned slot numbers based on offsets from the top of the global constant pool entries, the offset values pointing from the slots to the global method entries and field method entries, respectively, within the unified classfile bundle.

### BRIEF DESCRIPTION OF THE DRAWINGS

A better understanding of the present invention can be obtained from the following detailed description in conjunction with the following drawings, in which:
FIG. 1 illustrates constant pool entries and other elements within a class file.
FIG. 2 illustrates MethodRef and FieldRef constant pool entries referring to methods and fields within a class file.
FIG. 3 illustrates an internal view of a portal device according to one embodiment of the invention. Fig. 4 illustrates a network architecture including a content
conversion module according to one embodiment of the invention.
FIG. 5 illustrates a class file bundle according to one embodiment of the invention.
FIG. 6 illustrates pointer/offsets within a bundle.
FIG. 7 illustrates a process for generating a bundle according to one embodiment of the invention.

### DETAILED DESCRIPTION OF PREFERRED EMBODIMENTS

In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

### AN EXEMPLARY NETWORK ARCHITECTURE

Elements of the present invention may be included within a client-server based architecture. According to embodiment, a portal server communicates with clients and other network servers over a network (e.g., the Internet). The network over which the clients and servers, transmit and receive data may be comprised of any combination of private (e.g., leased) and/or public communication channels. These may include, for example. Digital Signal ("DS") channels (e.g., DS-3/T-3, DS-1/T1), Synchronous Optical Network ("SONET") channels (e.g., OC-3/STS-3), Integrated Services Digital Network ("ISDN") channels, Digital Subscriber Line ("DSL") channels, cable modem channels and a variety of wireless communication channels including satellite broadcast and cellular channels.

In addition, various networking protocols may be used to support communication across the network including, for example, the Asynchronous Transfer Mode ("ATM"), Ethernet, and Token Ring (at the data-link level); as well as Transmission Control Protocol/Internet Protocol ('TCP/IP"), Internetwork Packet Exchange ("IPX"), AppleTalk and DECnet (at the network/transport level). It should be noted, however, that the principles of the invention are not limited to any particular communication channel or protocol.

The portal server in one embodiment includes a user database for storing various types of user configuration and account data. Users may register and login to the portal server from a client by specifying a user ID and/or password. According to one embodiment, a user connects to the servers, via a browser application such as Netscape Navigator^{™} or Microsoft Internet Explorer^{™} which communicates via the Hypertext Transfer Protocol (hereinafter "HTTP").

In one embodiment, users may configure the portal server to retrieve and manage specific types of information. For example, a user may configure the portal server to retrieve up-to-date stock quotes for a specified set of stocks (e.g., reflecting the user's portfolio), to collect the weather forecast for the users hometown, and/or to retrieve recent articles relating to a particular sports franchise. The portal server will then retrieve the specified information from other servers (e.g., server) on behalf of the user.

In addition to information retrieval and management, in one embodiment the portal server also provides application services such as email, online scheduling (e.g., appointments, to-do lists, etc), instant messaging, contact management, word processing and a variety of other online services. Users may access these services by logging in to the portal server with a valid user ID and password. In one embodiment, the portal server generates a unique, personalized Web page for each user containing links to all, or a subset of, the information and/or services subscribed to by the user.

### EMBODIMENTS OF THE INVENTION

In one embodiment, a portal device stores and processes user-specified information and/or programs as well as non-user-specified information/programs (e.g., targeted advertisements based on the users profile). The information/programs may be transmitted to the portal device through the client, and/or directly via wireless broadcast. Thus, the portal device in this embodiment is a removable extension of the portal server, storing a subset of the information and services maintained by the portal server on behalf of the user. For example, a user may configure the portal server to periodically download the user's to-do list (or other scheduling data) to the portal device (e.g., every morning, every two hours, every time the user connects the portal device to the client, etc). When the user leaves the office, he/she can simply take the portal device with him/her and view his/her schedule throughout the day.

The timing of the information/program download may depend on the particular embodiment of the portal device. For example, if a wireless embodiment is used (described below) downloads may occur at any time when the portal device is within wireless transmission range, whereas if a non-wireless embodiment is used, downloads may be limited to periods of time when the portal device is connected to the portal server.

In one embodiment, the user may customize the portal device preferences and content which will be downloaded to the portal device from the portal server. This may be accomplished, for example, by selecting certain preferences/content from a portal server Web page (e.g., by using an online programming interface as described below). For example, the user may choose to have each day's to-do list downloaded to his portal device and may also program the device (e.g., via the portal server) to continually display the next scheduled event for the day. Various other user interface and content-based data may be transmitted to the portal device from the portal server while still complying with the underlying principles of the invention.

### Client Link

One embodiment of the portal device communicates to the portal server via a communication link with the client. The communication link may be established via a physical I/O connection with the client such as a Universal Serial Bus ("USB") interface or a communication ("serial") interface. Alternatively, the communication link may be a wireless link such as an Infrared I/O channel or a radio frequency ("RF") I/O channel.

In one particular embodiment, the client link is formed using a capacitively-coupled communication channel. As is known in the art, a capacitor is any dielectric sandwiched between two conductive elements. In this embodiment, one of the two conductive elements is located within the portal device and the second of the two conductive elements is located external to the portal device and is communicatively coupled to an I/O port of the client. For example, in one embodiment, the second conductive element may be disposed within user's mouse pad. According to this embodiment, the user may simply place the portal device on the mouse pad to set up the capacitive communication link with the client. It should be noted, however, that various other client links may be employed while still complying with the underlying principles of the invention.

### Direct Radio Broadcast

In one embodiment, data and/or programs are transmitted to the portal device from the portal server over an RF link. In this embodiment, the organization maintaining the portal server and/or implementing other features of the system and method described herein (hereinafter the "portal organization" or "PO"), may lease a portion of the RF transmission bandwidth from one or more radio stations. It should be noted, however, that various RF transmission techniques may be used without departing from the underlying principles of the invention.

### Embodiments of the Portal Device

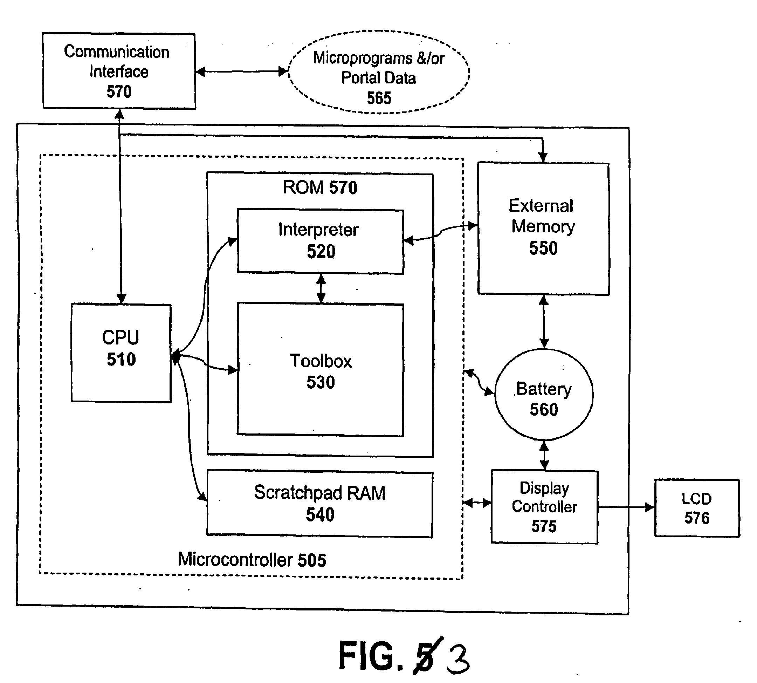

As illustrated in Figure 3, one embodiment of the portal device is comprised generally of a microcontroller 505, an external memory 550, a display controller 575, and a battery 560. The external memory 550 may be used to store programs and/or portal data 565 transmitted to the portal device from the portal server (e.g., via client and/or radio station). In one embodiment, the external memory 550 is non-volatile memory (e.g., an electrically erasable programmable read only memory ("EEPROM"); a programmable read only memory ("PROM"), etc). Alternatively, the memory 550 may be a volatile memory (e.g., random access memory or "RAM") but the data stored therein may be continually maintained via the battery 560. The battery 560 In one embodiment is a coin cell battery (e.g., of the same type used in portable electronic devices such as calculators and watches). In one embodiment, when the battery power decreases below a threshold level, the portal device 150 will notify the user and/or the portal server. The portal server in one embodiment will then automatically send the user a new battery.

The microcontroller 505 of one embodiment is comprised of a central processing unit ("CPU") 510, a read only memory ("ROM") 570, and a scratchpad RAM 540. The ROM 570 is further comprised of an interpreter module 520 and a toolbox module 530.

The toolbox module 530 of the ROM 570 contains a set of toolbox routines for processing data, text and graphics on the portal device. These routines include drawing text and graphics on the portal device's display 430, decompressing data transmitted from the portal server, reproducing audio on the portal device, and performing various input/output and communication functions (e.g., transmitting/receiving data over the client link and/or the RF link). A variety of additional portal device functions may be included within the toolbox 530 while still complying with the underlying principles of the invention.

In one embodiment, microprograms and portal data 560 are transmitted from the portal server to the external memory 550 of the portal device via a communication interface 570 under control of the CPU 510. Various communication interfaces 570 may be employed without departing from the underlying principles of the invention including, for example, a Universal Serial Bus ("USB") interface or a serial communication ("serial") interface. The microprograms in one embodiment are comprised of compact, interpreted instructions known as "bytecodes," which are converted into native code by the interpreter module 520 before being executed by the CPU 510. One of the benefits of this configuration is that when the microcontroller/CPU portion of the portal device is upgraded (e.g., to a faster and/or less expensive model), only the interpreter module 520 and toolbox 530 of the ROM needs to be rewritten to interpret the currently existing bytecodes for the new microcontroller/CPU. In addition, this configuration allows portal devices 150 with different CPUs to coexist and execute the same microprograms. Moreover, programming frequently-used routines in the ROM toolbox module 530 reduces the size of microprograms stored in the external memory 550, thereby conserving memory and bandwidth over the client link and/or the RF link 220. In one embodiment, new interpreter modules 520 and/or toolbox routines 530 may be developed to execute the same microprograms on cellular phones, personal information managers ("PtMs"), or any other device with a CPU and memory.

One embodiment of the ROM 570 may be comprised of interpreted code as well as native code written specifically for the microcontroller CPU 505. More particularly, some toolbox routines may be written as interpreted code (as indicated by the arrow between the toolbox 530 and the interpreter module 520) to conserve memory and bandwidth for the same reasons described above with respect to microprograms. Moreover, in one embodiment, data and microprograms stored in external memory 550 may be configured to override older versions of data/microprograms stored in the ROM 570 (e.g., in the ROM toolbox 530).

As mentioned above, the portal device may communicate with the portal server using various RF communication techniques. For example, in one particular embodiment, the portal device transmits and receives data to/from a cellular network via the cellular digital packet data ("CDPD") standard. As it is known in the art, the CDPD standard is a digital wireless standard that is deployed as an enhancement to the existing analog cellular network.. It provides a packet overlay onto the AMPS network and moves data at 19.2 Kbps over continuously-changing unused intervals in standard voice channels. Accordingly, this embodiment of the portal device is capable of exploiting normally unused bandwidth on a nation-wide, analog cellular network. Embodiments of the portal device may also be configured to transmit/receive data using a variety of other communication standards including 2-way paging standards and third generation ("3G") wireless standards (e.g., UTMS, CDMA 2000, NTT DoCoMo, ... etc).

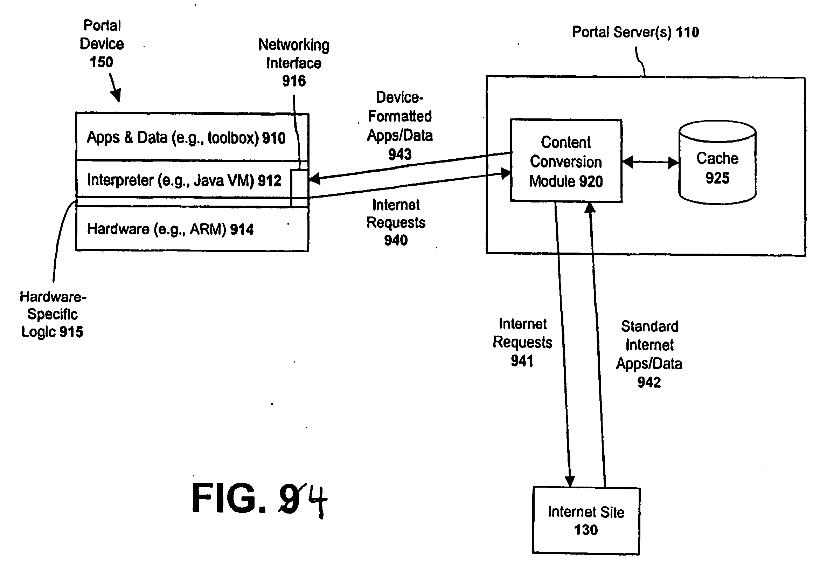

As described above, because certain embodiments of the portal device are configured to process hardware-independent interpreted code (e.g., via an interpreter module 520 such as a Java virtual machine), applications may be ported to new hardware platforms without significant changes. In addition, as illustrated in Figure 4, in one embodiment, communications functionality is provided via a modular networking interface 916, which may be easily modified/replaced without altering existing portal device applications 910 or significant portions of the bytecode interpreter 912. For example, when changing from a CDPD network to a 3G network, only the network interface component 916 of the VM interpreter 912 will need to be updated (along with any required 3G hardware 914) to support the new 3G protocol.

As described above (and as indicated in Figure 4), in one embodiment, the interpreter module 912 on the portal device is a Java virtual machine. As such, this embodiment of the portal device is capable of executing a vast library of existing hardware-independent Java applications (e.g., applets/ bytecodes) 910. Moreover, as indicated in Figure 4, one embodiment of the portal device employs a 32-bit RISC-based microprocessor such as an ARM processor. As is known in the art, ARM processors are widely used in PDAs, cell phones and a variety of other wireless devices. It should be noted, however, that various other hardware and software (and/or firmware) architectures may be used for the portal device while still complying with the underlying principles of the invention.

As described above, one embodiment of the portal server converts standard applications and data into a format which the portal device can properly interpret. Accordingly, as illustrated in Figure 4, this embodiment of the portal server may include a content conversion module 920 for processing portal device requests for Internet content 940. More particularly, in one embodiment, the portal server acts as a proxy for the portal device, forwarding Internet requests 940, 941 to the appropriate internet site on behalf of the portal device, receiving responses from the internet site in a standard internet format (e.g., Web pages with embedded audio/video and graphical content), and converting the standard internet responses 924 into a format which the portal device can process (e.g., bytecodes).

For example, the conversion module 920 may include a hypertext markup language ("HTML") rendering module (not shown) for interpreting HTML code and downloading any embedded content in the HTML code (e.g., graphics, video, sound, .... etc) to the portal server. The conversion module 920 may then combine the HTML code and embedded content and generate a set of bytecodes for accurately reproducing the requested content on the portal device. As described above, in one embodiment, the bytecodes may be Java bytecodes/applets. However, various other types of interpreted and/or non-interpreted code may be generated, depending on the particular type of portal device being used (e.g., one with an interpreter module or one without).

Because the portal server has an intimate knowledge of the capacities/configuration of each portal device (e.g., screen size, graphics/audio capabilities, available memory, processing power, user preferences, ... etc) it can reconstruct the requested internet content accurately, while at the same time minimizing the bandwidth required to transmit the content to the device. For example, the conversion module 920 may perform pre-scaling and color depth adjustments to the requested content so that it will be rendered properly within the portal device display. In making these calcultations, the conversion may factor in the memory and processing power available on the portal device. In addition, the conversion module 920 may compress the requested content using a variety of compression techniques (and thereby preserve network bandwidth).

In one embodiment, the conversion module 920 will simply discard Internet content which either cannot be reproduced on the portal device, or which the user has indicated that he/she does not want to be reproduced on the portal device. For example, a user may indicate that he/she does not want sounds to be generated on the portal device or that he/she does not want advertisements transmitted to the portal device. The conversion module 920 will then remove any sounds or advertisements embedded in the requested Web page (or other requested Internet content). Because HTML rendering and other advanced processing of Internet content/data is offloaded to the portal server as described above, the portal device can be manufactured using a low power microprocessor or microcontroller, thereby lowering the cost of manufacture and/or the energy consumed by the device.

In one embodiment, when a particular Web page or other internet object has been converted into a format suitable for execution on the portal device (e.g., Java bytecodes and data) the formatted page/object may be stored locally on a cache 925 at the portal server (or other server maintained by the PO). Thus, the next time the content is requested, the conversion module 920 may simply read the previously-generated code from the local cache 925 (i.e., it will no longer need to retrieve the content from remote locations to reconstruct the code).

Various caching techniques and algorithms may be implemented to ensure that the cache 925 is storing internet data efficiently (i.e., resulting in an acceptable percentage of cache 'hits') and that the data is current. For example, the portal server may cache the most frequently-requested internet data (e.g., the Yahoo^{™} home page), and may remove content from the cache based on a least-recently used caching policy. In addition, to ensure that data stored in the cache is current, the portal server may compare the version of the data stored in the cache 925 with the version of data stored at the remote Internet site when the data is requested. Similarly, the portal server may store data in the cache 925 for some predetermined period of time before checking the remote server for a new version. Various other Internet caching techniques may be employed while still complying with the underlying principles of the invention (e.g., those defined in the Internet Caching Protocol ("ICP") and/or the Cache Array Routing Protocol ("CARP")).

### Class File Processing

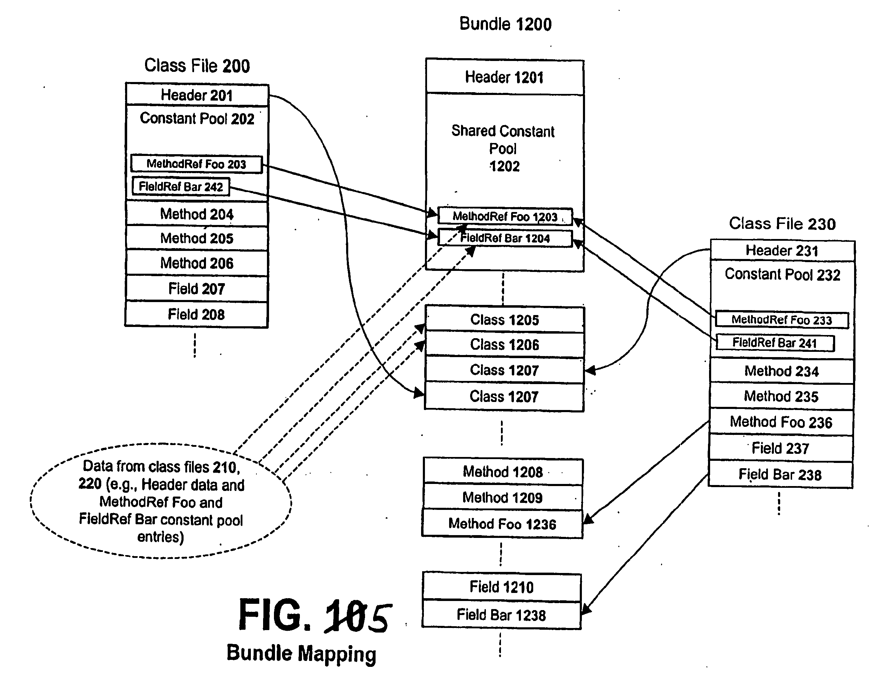

In one embodiment of the invention, class files (or other types of program code) are compressed before being transferred to the portal device (or other data processing device). The compression may be performed manually (e.g., by portal organization staff) or automatically, using a computer-implemented compression/conversion algorithm. Various class file compression/conversion techniques will now be described with respect to **Figures 5-7**.

As illustrated in **Figure 5**, in one embodiment, each of the class files used in a particular application program (or applet) are combined to form a unified programming object referred to herein as a "bundle" 1200. For the purpose of illustration, the particular bundle 1200 shown in **Figure 5** is constructed from the class files 200, 210, 220 and 230 of **Figure 2****.** More specifically, the redundant MethodRef Foo entries 203, 213, 223 and 233 are combined into a single, "global" MethodRef Foo entry 1203 in a shared constant pool 1202 within the bundle 1200. Similarly, the redundant FieldRef Bar entries 240-242 are combined into a single, global FieldRef Bar 1204 entry within the shared constant pool, thereby further reducing the memory requirements of the application.

The methods and fields from the original class files 200, 210, 220, 230 are copied to the bundle as well along with various other class file objects (not shown). Thus, Method Foo 236 is copied to the bundle as Method Info entry 1236 and Field Bar 238 is copied to the bundle as Field Info entry 1238. In addition, header data 201, 211, 221, and 231 for each of the class files are copied to the bundle as Class Info objects 1205-1208, respectively.

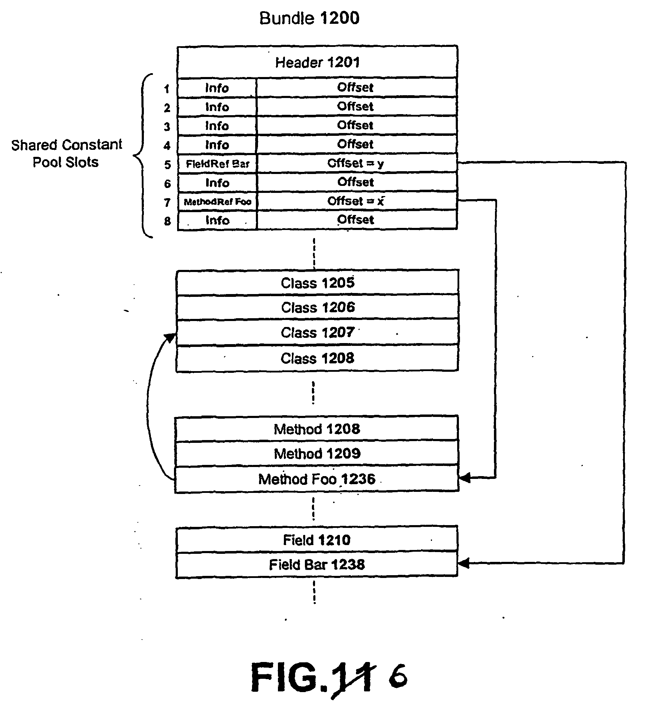

In one embodiment, unlike the constant pool entries in standard class files, the shared constant pool entries 1202 of the bundle are fixed-length entries (e.g., 32 bits in length). Accordingly, constant pool entries and other data/code within the bundle reference one another based on an offset value from the top of the constant pool (i.e., rather than based on an address in memory): The offsets are generated during the bundle link process (described in greater detail below). For example, referring to **Figure 6**, the FieldRef Bar entry within the shared constant pool is assigned a slot number based on its offset from the top of the constant pool - slot # 5 in the example. The constant pool entry itself includes an offset value identifying where the code referenced by the entry resides within the bundle. Thus, the transformed Method Info entry 1236 (i.e., containing Method Foo code) may be located by referencing constant pool slot # 5 and reading the offset provided by the entry (identified as "Offset X" in the example). The same lookup technique may be used to locate other code/data within the bundle. For example, Field Info entry 1238 may be located based on the offset (identified as "Offset Y") provided by the FieldRef Bar constant pool entry in slot # 7.

Conversely, a Class Info entry, Method Info entry, Field Info entry, or any other type of entry within the bundle 1200 may include a pointer/offset used to identify a particular constant pool entry. For example, a bytecode included in the Method Info entry 1236 may cause the creation of a new class of type defined by a particular constant pool entry. Thus, as indicated in **Figure 6**, the Method Info entry 1236 will contain a pointer to its Class Info object 1208 which includes a pointer to the identified constant pool entry (i.e., entry no. 6). Thus, because all of these elements are self-referential, a method can find a class that owns it and the class can identify the bundle to which it is attached. Moreover, because all elements are located relative to one another within the bundle, complex addressing techniques are not required to identify the bundle elements in memory (i.e., the bundle may be loaded at random to any memory area).

During the bundle generation/link process, certain types of data may be copied directly from the class file to which it belongs whereas other types of class file data/code must be modified and/or created. For example, during the generation of Class Info objects, the following data may be copied in substantially unmodified (or slightly modified) form to the bundle: the class reference to itself and the superclass via the constant pool; the count of fields and methods; and access/attribute flags (e.g., public, private, protected, static, abstract, ... etc). A relative pointer back to the containing bundle is created during the bundle generation process so that the class can identify the bundle to which it belongs (e.g., so it can reference constant pool entries within the bundle). Similarly, a reference to classobject is generated during the generation process.

For Method Info objects, data which may be copied directly includes a reference to the method name via constant pool; a reference to type signature via constant pool; any access/attribute flags; max stacks data; max locals data; the argument count, and the return count, to name a few. A relative pointer back to the Class Info object that the method belongs to will also be generated (i.e., so that the Method Info object can identify the Class Info object within the bundle). Method bytecodes, exception tables, and/or virtual table ("vtable") slot numbers associated with the method may also be modified during the bundle generation process to account for the new locations of data within the shared constant pool. For native methods, function pointers to native code implementations will be filled in during the bundle load.

For Field Info generation, a relative pointer is generated identifying the class to which it belongs (i.e., the Class Info object) and an offset of the field into the object instance. Data which may be copied directly to the bundle includes a reference to the field name via constant pool; a reference to the field type signature via constant pool; and any access/attribute flags.

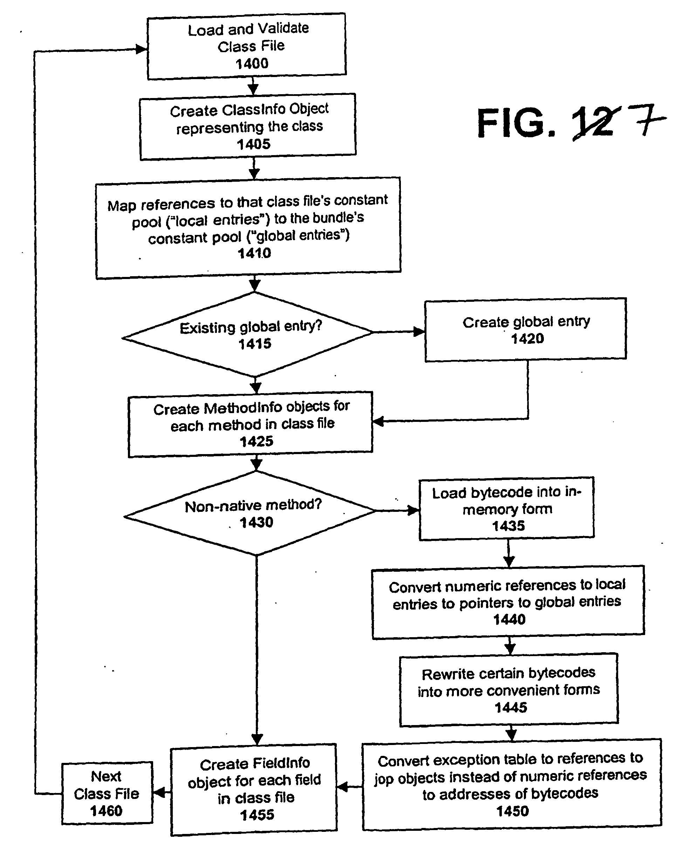

One specific embodiment of a bundle generation/linking process for class files will now be described with respect to the flowchart **in** **Figure 7**. It should be noted, however, that various steps set forth in **Figure 7** are for the purpose of illustration and are not necessary for complying with the underlying principles of the invention.

At 1400, a class file to be incorporated into a bundle is loaded into memory and validated. For example, if the class file is a Java class file, the file is validated per the Java virtual machine specification. For standard Java virtual machine operation, validation typically occurs at runtime when a class is first loaded. Because this embodiment of the invention validates each of the class files before incorporating them in the bundle, however, runtime validation of the class file/bundle is not required, thereby further reducing the processing requirements of the device on which the bundle is executed (e.g., the portal device). The bundle may be cryptographically signed to provide proof of its authenticity.

At 1405, a Class Info object is created for the class file using data extracted from the class file's header including, for example, the name of the class file and other class file identification data and associated parameters. At 1410, any references to the class file's constant pool (i.e., "local" constant pool entries) are mapped to corresponding "global" entries in the bundle's shared constant pool. If a global entry already exists, determined at 1415 (e.g., because another class file contained the entry), then Method Info objects are generated for each method in the class file at 1425. If the global entry does not exist, then a new global entry is created in the shared constant pool at 1420 before the Method Info objects are generated.

All non-native methods (e.g., those methods containing actual bytecode), identified at 1430, are modified in the following manner. Bytecodes within the method are loaded into an in-memory form at 1435 (e.g., a linked list of jop objects, one per java opcode in the bytecode). At 1440, numeric references identifying local entries are converted into pointers to global entries such as the shared constant pool entries described above. At 1445, certain bytecodes are converted/rewritten into more convenient forms. Finally, at 1450, the method's exception table is converted to references to jop objects instead of numeric references to addresses of bytecodes. When method processing is complete, at 1455, Field Info objects are created for each field in the class file and incorporated into the bundle. At 1460, processing for the class file is complete and the next class file to be processed is identified.

Once a complete set of class files have been loaded and linked into the in-memory temporary representation of the bundle, further validation is performed to insure that all references are resolved. The in-memory representation is written out in to a binary bundle object with relative references (via global constant pool entry number) instead of pointers.

Accordingly, one embodiment of the invention temporarily converts the bytecodes into a graph of jop objects so that the constant pool references can be adjusted from local to global numbers and rewrite certain bytecodes. This process may change the size of some bytecodes so the graph is used to track where jump operations pointed before the bytecodes are modified. The bytecodes are modified and adjusted appropriately before they are written back out in the bundle.

By way of a specific example, assuming the following lines of code are used:
20 op_ifne 5
23 op_Idc #3
25 ...
the bytecode at 20 (op_ifne) jumps forward 5 bytes if an expression is not equal to zero. the op_Idc bytecode loads an item from the constant pool (entry #3). If that constant pool entry were remapped to say #300, the two-byte op_Idc would no longer work (it can only refer to entries 0-255) would therefore be rewritten to a three-byte op_Idcw instruction (of course now the op_ifne needs to be adjusted ... etc).

In addition, in one embodiment, entries in the bundle's constant pool may refer to entries in a shared system bundle's constant pool (by way of a special bit set in the type identifier). This allows a system bundle to be provided with the core class library and each app In its own bundle (so that the apps can be easily added/removed). Moreover, in one embodiment, the bytecodes are transformed to a similar virtual machine that maintains the semantics of the Java virtual machine but supports a number of alternative bytecodes that provide more compact object code and/or faster system operation.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

Throughout the foregoing description, for the purposes of explanation, numerous specific details were set forth in order to provide a thorough understanding of the invention. It will be apparent, however, to one skilled in the art that the invention may be practiced without some of these specific details. For example, while the system described above focuses on a Java class file implementation, the underlying principles of the invention may be performed on various other types of object code (e.g., C++). Accordingly, the scope of the invention should be judged in terms of the claims which follow.

## Claims

1. A method implemented on a computer for combining a plurality of classfiles (200, 230) into a unified classfile bundle (1200) that includes the methods (204. 205, 206, 234, 235, 236) and fields (207, 208, 237, 238) of the original classfiles (200, 230), the method comprising:
copying the methods (204, 205, 206, 235, 236) of the original classfiles (200, 230) into the unified classfile bundle (1200), thereby generating a global method entry (1208, 1209, 1236) within the unified classfile bundle (1200) for each method (204, 205, 206, 234, 235, 236) within the plurality of classfiles (200, 230);
copying the fields (207, 208, 237, 238) of the original classfiles (200, 230) into the unified classfile bundle (1200), thereby generating a global field entry (1210, 1238) within the unified classfile bundle (1200) for each field (207, 208, 237, 238) within the plurality of classfiles (200, 230);
converting local constant pool entries (203, 242, 233, 241) from local constant pools (202, 232) of each of the plurality of classfiles (200, 230) which reference methods (204, 205 206; 234, 235, 236) and fields (207, 208, 37, 238) of each class file (200, 230) into global constant pool entries (1203, 1204) within the unified classfile bundle (1200), wherein converting comprises removing redundant local constant pool entries (203, 242, 233; 241),
**characterised in that** converting further comprises replacing the references pointing from the local constant pool entries (263, 242, 233, 241) to methods (236) and fields (237) with offset values provided in slots, that are assigned slot numbers based on offsets from the top of the global constant pool entries (1203, 1204), the offset values pointing from the slots to the global method entries (1208, 1209, 1236) and field entries (1210, 1238), respectively, within the unified classfile bundle (1200).

2. The method as in claim 1, wherein combining further comprises converting variable-length local constant pool entries (203, 242, 233, 241) from each of the classfiles (200, 230) with fixed-length constant pool entries within the unified classfile bundle (1200).

3. The method as in claim 1, wherein combining further comprises:
for each local constant pool entry (203, 242, 233, 241); determining whether a corresponding global constant pool entry (1203, 1204) already exists; and
if a corresponding global constant pool entry (1203, 1204) already exists, then using the existing global constant pool entry (1203, 1204) in lieu of the local constant pool entry (203, 242, 233, 241); and
if the global constant pool entry (1203, 1204) does not exist, then generating a new global constant pool entry (1203, 1204) from the local constant pool entry (203, 242, 233, 241).

4. The method as in claim 1, wherein each global method entry (1208, 1209, 1236) comprises a Method Info object, and wherein generating the Method Info object comprises directly copying data of a first type from each method of each classfile (200, 230) and modifying data of a second type prior to copying the data from each method of the classfile (200, 230).

5. The method as in claim 1, wherein the data of the first type includes a reference to the method name via the constant pool; a reference to a type signature via the constant pool; access or attribute flags; max stacks data; max locals data; an argument count, and/or a return count.

6. The method as in claim 4, wherein the data of the second type includes Method bytecodes, exception tables, and/or virtual table slot numbers associated with the method.

7. The method as in claim 1, wherein each global field entry (1210, 1238) comprises a Field Info object, and wherein generating the Field Info object comprises directly copying data of a first type from each field of each classfile (200, 230) and modifying data of a second type prior to copying the data from each field of the classfile (200, 230).

8. The method as in claim 5, wherein the data of the first type includes a reference to the field name via constant pool; a reference to the field type signature via the constant pool; and/or any access/attribute flags.

9. The method as in claim 1, further comprising:
generating a Class Info object within the unified classfile bundle (1200) for each header (201, 231) of each classfile (200, 230), each Class Info object containing header data from each classfile header (201, 231).

10. The method as in claim 7 further comprising:
generating a relative pointer for each global method entry (1208, 1209, 1236) and each global field entry (1210, 1238), the relative pointer pointing to a Class Info object that the global method entry (1208, 1209, 1236) or global field entry (1210, 1238) is associated with.

11. The method as in claim 1, further comprising:
generating a relative pointer for each global method entry (1208, 1209, 1236) and each global field entry (1210, 1238), the relative pointer pointing to a global constant pool entry (1203, 1204) that the global method entry (1208, 1209, 1236) or global field entry (1210, 1238) is associated with.

12. The method as in claim 1, wherein, to rearrange the elements of the two or more classfiles (200, 230), a content conversion module (920) combines redundant constant pool entries from said two or more classfiles (200, 230) to form a global constant pool entry (1203, 1204) in a shared constant pool (1202) within said unified classfile bundle (1200).

13. The method as in claim 12 wherein combining further comprises:
rewriting said global constant pool entries (1203, 1204) to point to elements contained within said unified classfile bundle (1200), said elements corresponding to elements contained in said one or more classfiles (200, 230) and previously identified by said one or more redundant constant pool entries.

14. The method as in claim 13 wherein one of said global constant pool entries (1203, 1204) is a methodref entry and said element identified by constant pool entry is a method copied to said unified classfile bundle (1200) from said one or more classfiles (200, 230).

15. The method as in claim 14 wherein, to rearrange the elements of the two or more classfiles (200, 230), the content conversion module (920) converts numeric references to local entries within a bytecode in said method or pointers to global constant pool entries (1203, 1204).

16. The method as in claim 15 wherein, to rearrange the elements of the two or more classfiles (200, 230), the content conversion module (920) converts an exception table associated with said method to reference to Java opcode objects ("jop objects") instead of numeric references to addresses of bytecodes.

17. The method as in claim 13 wherein one of said global constant pool entries (1203, 1204) is a fieldref entry.

18. The method as in claim 1, wherein, to rearrange the elements of the two or more classfiles (200, 230), a content conversion module (920) validates said two or more classfiles (200, 230) before mapping said elements to form said unified classfile bundle (1200).

19. The method as in claim 18, wherein, to rearrange the elements for the two or more classfiles (200, 230), the content conversion module (920) converts the classfiles (200, 230) into a graph of Java opcode objects ("jop objects") to track where jump operations pointed before modification of said classfiles (200, 230); adjusts constant pool references from local to global numbers based on said graph; and combines the classfiles (200, 230) into the unified classfile bundle (1200).

20. The method as in claim 1, wherein a portal server (110) automatically retrieves classfiles (200, 230) from an internet site on behalf of a data processing device in response to requests for the classfiles (200, 230) from the data processing device.

21. The method as in claim 1, wherein a portal server (110) manually retrieves classfiles (200, 230) from an Internet site on behalf of a data processing device in response to requests by an organization managing the portal server (110).

22. A computer program containing a sequence of code which, when executed by a machine, causes said machine to perform the method of any one of claims 1 to 21.

## Patentansprüche

1. Computerimplementiertes Verfahren zum Zusammenfassen mehrerer Klassendateien (200, 230) in einem vereinigten Klassendateibündel (1200), das die Methoden (204, 205, 206, 234, 235, 236) und Felder (207, 208, 237, 238) der ursprünglichen Klassendateien (200, 230) beinhaltet, wobei das Verfahren Folgendes umfasst:
Kopieren der Methoden (204, 205, 206, 235, 236) der ursprünglichen Klassendateien (200, 230) in das vereinigte Klassendateibündel (1200), und hierbei: Erzeugen eines globalen Methodeneintrags (1208, 1209, 1236) in dem vereinigten Klassendateibündel (1200) für jede Methode (204, 205, 206, 234, 235, 236) aus den mehreren Klassendateien (200, 230);
Kopieren der Felder (207, 208, 237, 238) der ursprünglichen Klassendateien (200, 230) in das vereinigte Klassendateibündel (1200), und hierbei: Erzeugen eines globalen Feldeintrags (1210, 1238) in dem vereinigten Klassendateibündel (1200) für jedes Feld (207, 208, 237, 238) aus den mehreren Klassendateien (200, 230);
Konvertieren lokaler Konstantenpooleinträge (203, 242, 233, 241) aus den lokalen Konstantenpools (202, 232) jeder der mehreren Klassendateien (200, 230), die auf Methoden (204, 205, 206, 234, 235, 236) und Felder (207, 208, 237, 238) jeder der Klassendateien (200, 230) verweisen, in globale Konstantenpooleinträge (1203, 1204) in dem vereinigten Klassendateibündel (1200), wobei das Konvertieren das Entfernen redundanter lokaler Konstantenpooleinträge (203, 242, 233, 241) umfasst,
**dadurch gekennzeichnet, dass** das Konvertieren außerdem das Ersetzen der Verweise, die von den lokalen Konstantenpooleinträge (203, 242, 233, 241) auf Methoden (236) und Felder (237) zeigen, durch Offsetwerte umfasst, die in Slots bereitgestellt werden, denen Slotnummern zugeordnet sind, und dies basierend auf den Offsetbeträgen ab dem Anfang der globalen Konstantenpooleinträge (1203, 1204), wobei die Offsetwerte von den Slots auf die globalen Methodeneinträge (1208, 1209, 1236) bzw. Feldeinträge (1210, 1238) im vereinigten Klassendateibündel (1200) zeigen.

2. Verfahren nach Anspruch 1, bei dem das Zusammenfassen außerdem das Konvertieren von lokalen Konstantenpooleinträgen (203, 242, 233, 241) variabler Länge aus jeder der Klassendateien (200, 230) in Konstantenpooleinträge fester Länge im vereinigten Klassendateibündel (1200) umfasst.

3. Verfahren nach Anspruch 1, bei dem das Zusammenfassen außerdem Folgendes umfasst:
für jeden lokalen Konstantenpooleintrag (203, 242, 233, 241); Feststellen, ob bereits ein entsprechender globaler Konstantenpooleintrag (1203, 1204) vorhanden ist; und
falls ein entsprechender globaler Konstantenpooleintrag (1203, 1204) vorhanden ist, dann: Verwenden des vorhandenen globalen Konstantenpooleintrags (1203, 1204) anstatt des lokalen Konstantenpooleintrags (203, 242, 233, 241); und
falls der globale Konstantenpooleintrag (1203, 1204) nicht vorhanden ist, dann: Erzeugen eines neuen globalen Konstantenpooleintrags (1203, 1204) aus dem lokalen Konstantenpooleintrag (203, 242, 233, 241).

4. Verfahren nach Anspruch 1, bei dem jeder globale Methodeneintrag (1208, 1209, 1236) ein Methoden-Infoobjekt umfasst und bei dem das Erzeugen des Methoden-Infoobjekts das direkte Kopieren von Daten eines ersten Typs aus jeder Methode jeder Klassendatei (200, 230) und das Modifizieren von Daten eines zweiten Typs vor dem Kopieren der Daten aus jeder Methode der Klassendatei (200, 230) umfasst.

5. Verfahren nach Anspruch 1, bei dem die Daten des ersten Typs Folgendes einschließen: einen Verweis auf den Methodennamen über den Konstantenpool; einen Verweis auf eine Typsignatur über den Konstantenpool; Zugriffs- oder Attribut-Flags; einen max-stacks Wert; einen max-locals Wert; einen Argumentzähler und/oder einen Rückgabewertzähler.

6. Verfahren nach Anspruch 4, bei dem die Daten des zweiten Typs Folgendes einschließen: Methoden-Bytecode, Ausnahmetabellen und/oder der Methode zugehörige Slotnummern für virtuelle Tabellen.

7. Verfahren nach Anspruch 1, bei dem jeder globale Feldeintrag (1210, 1238) ein Feld-Infoobjekt umfasst und bei dem das Erzeugen des Feld-Infoobjekts das direkte Kopieren von Daten eines ersten Typs aus jedem Feld jeder Klassendatei (200, 230) und das Modifizieren von Daten eines zweiten Typs vor dem Kopieren der Daten aus jedem Feld der Klassendatei (200, 230) umfasst.

8. Verfahren nach Anspruch 5, bei dem die Daten des ersten Typs Folgendes einschließen: einen Verweis auf den Feldnamen über den Konstantenpool; einen Verweis auf die Feldtypsignatur über den Konstantenpool; und/oder etwaige Zugriffs/Attribut-Flags.

9. Verfahren nach Anspruch 1, außerdem Folgendes umfassend:
Erzeugen eines Klassen-Infoobjekts im vereinigten Klassendateibündel (1200) für jeden Header (201, 231) jeder Klassendatei (200, 230), wobei jedes Klassen-Infoobjekt die Headerdaten aus jedem der Klassendatei-Header (201, 231) beinhaltet.

10. Verfahren nach Anspruch 7, außerdem Folgendes umfassend:
Erzeugen eines relativen Zeigers für jeden globalen Methodeneintrag (1208, 1209, 1236) und jeden globalen Feldeintrag (1210, 1238), wobei der relative Zeiger auf ein Klassen-Infoobjekt zeigt, das dem globalen Methodeneintrag (1208, 1209, 1236) oder dem globalen Feldeintrag (1210, 1238) zugeordnet ist.

11. Verfahren nach Anspruch 1, außerdem Folgendes umfassend:
Erzeugen eines relativen Zeigers für jeden globalen Methodeneintrag (1208, 1209, 1236) und jeden globalen Feldeintrag (1210, 1238), wobei der relative Zeiger auf einen globalen Konstantenpooleintrag (1203, 1204) zeigt, der dem globalen Methodeneintrag (1208, 1209, 1236) oder dem globalen Feldeintrag (1210, 1238) zugeordnet ist.

12. Verfahren nach Anspruch 1, bei dem für die Neuanordnung der Elemente der zwei oder mehr Klassendateien (200, 230) ein Inhalt-Konvertierungsmodul (920) redundante Konstantenpooleinträge aus den zwei oder mehr Klassendateien (200, 230) zusammenfasst, um einen globalen Konstantenpooleintrag (1203, 1204) in einem gemeinsam genutzten Konstantenpool (1202) in dem vereinigten Klassendateibündel (1200) zu bilden.

13. Verfahren nach Anspruch 12, bei dem das Zusammenfassen außerdem Folgendes umfasst:
das Neuschreiben der globalen Konstantenpooleinträge (1203, 1204), so dass sie auf Elemente zeigen, die im vereinigten Klassendateibündel (1200) enthalten sind, wobei diese Elemente Elementen entsprechen, die in der einen oder den mehreren Klassendateien (200, 230) enthalten sind und die zuvor von dem einen oder den mehreren redundanten Konstantenpooleinträgen identifiziert wurden.

14. Verfahren nach Anspruch 13, bei dem einer der globalen Konstantenpooleinträge (1203, 1204) ein Methodref-Eintrag ist und das durch einen Konstantenpooleintrag identifizierte Element eine Methode ist, die aus der einen oder den mehreren Klassendateien (200, 230) in das vereinigte Klassendateibündel (1200) kopiert wurde.

15. Verfahren nach Anspruch 14, bei dem für die Neuanordnung der Elemente der zwei oder mehr Klassendateien (200, 230) das Inhalt-Konvertierungsmodul (920) numerische Verweise auf lokale Einträge innerhalb eines Bytecodes in der Methode oder Zeiger in globale Konstantenpooleinträge (1203, 1204) konvertiert.

16. Verfahren nach Anspruch 15, bei dem für die Neuanordnung der Elemente der zwei oder mehr Klassendateien (200, 230) das Inhalt-Konvertierungsmodul (920) eine der Methode zugeordnete Ausnahmetabelle so konvertiert, dass sie auf Java-Opcodeobjekte ("jop-Objekte") verweist, anstatt der Verwendung numerischer Verweise auf Bytecode-Adressen.

17. Verfahren nach Anspruch 13, bei dem einer der globalen Konstantenpooleinträge (1203, 1204) ein Fieldref-Eintrag ist.

18. Verfahren nach Anspruch 1, bei dem für die Neuanordnung der Elemente der zwei oder mehr Klassendateien (200, 230) ein Inhalt-Konvertierungsmodul (920) die zwei oder mehr Klassendateien (200, 230) überprüft, bevor die Elemente abgebildet werden, um das vereinigte Klassendateibündel (1200) zu bilden.

19. Verfahren nach Anspruch 18, bei dem für die Neuanordnung der Elemente der zwei oder mehr Klassendateien (200, 230) das Inhalt-Konvertierungsmodul (920) Folgendes ausführt: Konvertieren der Klassendateien (200, 230) in einen Graphen von Java Opcode-Objekten ("jop-Objekte"), um zu verfolgen, wohin Sprungoperationen vor der Modifikation der Klassendateien (200, 230) zeigten; Anpassen von Verweisen des Konstantenpools von lokalen auf globale Zahlen, basierend auf dem Graphen; und Zusammenfassen der Klassendateien (200, 230) zu dem vereinigten Klassendateibündel (1200).

20. Verfahren nach Anspruch 1, bei dem ein Portalserver (110) im Auftrag einer Datenverarbeitungsvorrichtung automatisch Klassendateien (200, 230) von einer Internetseite abruft, und dies in Reaktion auf Anforderungen der Klassendateien (200, 230) durch die Datenverarbeitungsvorrichtung.

21. Verfahren nach Anspruch 1, bei dem ein Portalserver (110) im Auftrag einer Datenverarbeitungsvorrichtung manuell Klassendateien (200, 230) von einer Internetseite abruft, und dies in Reaktion auf Anforderungen durch ein Unternehmen, das den Portalserver (110) verwaltet.

22. Computerprogramm, das eine Codesequenz umfasst, die, wenn sie von einer Maschine ausgeführt wird, die Maschine dazu veranlasst, das Verfahren nach einem der Ansprüche 1 bis 21 auszuführen.

## Revendications

1. Procédé mis en oeuvre sur un ordinateur pour combiner une pluralité de classes utilitaires (200, 230) dans un groupe de classes utilitaires unifiées (1200) qui comprend les procédés (204, 205, 206, 234, 235, 236) et les champs (207, 208, 237, 238) des classes utilitaires d'origine (200, 230), le procédé comprenant les étapes consistant à :
■ copier les procédés (204, 205, 206, 235, 236) des classes utilitaires d'origine (200, 230) dans le groupe de classes utilitaires unifiées (1200), générant ainsi une entrée de procédé globale (1208, 1209, 1236) dans le groupe de classes utilitaires unifiées (1200) pour chaque procédé (204, 205, 206, 234, 235, 236) dans la pluralité de classes utilitaires (200, 230) ;
■ copier les champs (207, 208, 237, 238) des classes utilitaires d'origine (200, 230) dans le groupe de classes utilitaires unifiées (1200), générant ainsi une entrée de champ globale (1210, 1238) dans le groupe de classes utilitaires unifiées (1200) pour chaque champ (207, 208, 237, 238) dans la pluralité de classes utilitaires (200, 230) ;
■ convertir les entrées de réserve constante locales (203, 242, 233, 241) à partir des réserves constantes locales (202, 232) de chacune de la pluralité de classes utilitaires (200, 230) qui référencent les procédés (204, 205, 206, 234, 235, 236) et les champs (207, 208, 237, 238) de chaque classe utilitaire (200, 230) dans les entrées de réserve constante globales (1203, 1204) dans le groupe de classes utilitaires unifiées (1200), dans lequel l'étape de conversion comprend l'étape consistant à retirer les entrées de réserve constante locales redondantes (203, 242, 233, 241),
**caractérisé en ce que** l'étape de conversion comprend en outre l'étape consistant à remplacer les références pointant des entrées de réserve constante locales (203, 242, 233, 241) vers les procédés (236) et les champs (237) avec des valeurs de décalage prévues dans des fentes, qui sont des numéros de fente attribués en fonction des décalages par rapport à la partie supérieure des entrées de réserve constante globales (1203, 1204), les valeurs de décalage pointant des fentes jusqu'aux entrées de procédé globales (1208, 1209, 1236) et les entrées de champ (1210, 1238) respectivement, dans le groupe de classes utilitaires unifiées (1200).

2. Procédé selon la revendication 1, dans lequel l'étape de combinaison comprend en outre l'étape consistant à convertir les entrées de réserve constante locales à longueur variable (203, 242, 233, 241) à partir de chacune des classes utilitaires (200, 230) avec des entrées de réserve constante à longueur fixe dans le groupe de classes utilitaires unifiées (1200).

3. Procédé selon la revendication 1, dans lequel l'étape de combinaison comprend en outre :
■ pour chaque entrée de réserve locale constante (203, 242, 233, 241), l'étape consistant à déterminer si une entrée de réserve constante globale correspondante (1203, 1204) existe déjà ; et
■ si une entrée de réserve constante globale correspondante (1203, 1204) existe déjà, utiliser alors l'entrée de réserve constante globale existante (1203, 1204) au lieu de l'entrée de réserve constante locale (203, 242, 233, 241) ; et
■ si l'entrée de réserve constante globale (1203, 1204) n'existe pas, générer alors une nouvelle entrée de réserve constante globale (1203, 1204) à partir de l'entrée de réserve constante locale (203, 242, 233, 241).

4. Procédé selon la revendication 1, dans lequel chaque entrée de procédé globale (1208, 1209, 1236) comprend un objet "Info Procédé" et dans lequel l'étape consistant à générer l'objet "Info Procédé" comprend l'étape consistant à copier directement les données d'un premier type à partir de chaque procédé de chaque classe utilitaire (200, 230) et modifier les données d'un deuxième type avant de copier les données provenant de chaque procédé de la classe utilitaire (200, 230).

5. Procédé selon la revendication 1, dans lequel les données du premier type comprennent une référence au nom du procédé via la réserve constante ; une référence à une signature type via la réserve constante ; un accès ou des drapeaux d'attribut ; des données d'empilages maximums ; des données de lieux maximums ; un compte d'argument et/ou un compte de retour.

6. Procédé selon la revendication 4, dans lequel les données du deuxième type comprennent des cônes intermédiaires de données, des tableaux d'exception et/ou des numéros de fente de tableau virtuel associés au procédé.

7. Procédé selon la revendication 1, dans lequel chaque entrée de domaine globale (1210, 1238) comprend un objet "Info Champ" et dans lequel l'étape consistant à générer l'objet "Info Champ" comprend l'étape consistant à copier directement des données d'un premier type à partir de chaque champ de chaque classe utilitaire (200, 230) et l'étape consistant à modifier des données d'un deuxième type avant de copier les données de chaque champ de la classe utilitaire (200, 230).

8. Procédé selon la revendication 5, dans lequel les données du premier type comprennent une référence par rapport au nom de champ via la réserve constante ; une référence par rapport à la signature de type champ via la réserve constante et/ou tout accès/drapeaux d'attribut.

9. Procédé selon la revendication 1, comprenant en outre l'étape consistant à générer un objet "Info Classe" dans le groupe de classes utilitaires unifiées (1200) pour chaque en-tête (201, 231) de chaque classe utilitaire (200, 230), chaque objet "Info Classe" contenant des données d'en-tête provenant de chaque en-tête de classe utilitaire (201, 231).

10. Procédé selon la revendication 7, comprenant en outre l'étape consistant à générer un pointeur relatif pour chaque entrée de procédé globale (1208, 1209, 1236) et chaque entrée de champ globale (1210, 1238), le pointeur relatif pointant vers l'objet "Info Class" à laquelle l'entrée de procédé globale (1208, 1209, 1236) ou l'entrée de champ globale (1210, 1238) est associée.

11. Procédé selon la revendication 1, comprenant en outre l'étape consistant à générer un pointeur relatif pour chaque entrée de procédé globale (1208, 1209, 1236) et chaque entrée de champ globale (1210, 1238) le pointeur relatif pointant vers une entrée de réserve constante globale (1203, 1204) à laquelle l'entrée de procédé globale (1208, 1209, 1236) ou l'entrée de champ globale (1210, 1238) est associée.

12. Procédé selon la revendication 1, dans lequel, afin de réarranger les éléments des deux classes utilitaires ou plus (200, 230), un module de conversion de contenu (920) combine les entrées de réserve constante redondantes provenant des deux classes utilitaires (200, 230) ou plus pour former une entrée de réserve constante globale (1203, 1204) dans une réserve constante partagée (1202) dans ledit groupe de classes utilitaires unifiées (1200).

13. Procédé selon la revendication 12, dans lequel l'étape de combinaison comprend en outre l'étape consistant à réécrire lesdites entrées de réserve constante globales (1203, 1204) pour pointer les éléments contenus dans ledit groupe de classes utilitaires unifiées (1200), lesdits éléments correspondant aux éléments contenus dans lesdites une ou plusieurs classes utilitaires (200, 230) et précédemment identifiés par lesdites une ou plusieurs entrées de réserve constante redondantes.

14. Procédé selon la revendication 13, dans lequel l'une desdites entrées de réserve constante globales (1203, 1204) est une entrée de référence de procédé et ledit élément identifié par l'entrée de réserve constante est un procédé copié sur ledit groupe de classes utilitaires unifiées (1200) provenant desdites une ou plusieurs classes utilitaires (200, 230).

15. Procédé selon la revendication 14, dans lequel, afin de réagencer les éléments des deux classes utilitaires ou plus (200, 230), le module de conversion de contenu (920) convertit les références numériques en entrées locales dans un code intermédiaire dans ledit procédé ou les pointeurs des entrées de réserve constante globales (1203, 1204).

16. Procédé selon la revendication 15, dans lequel, afin de réagencer les éléments des deux classes utilitaires ou plus (200, 230), le module de conversion de contenu (920) convertit un tableau d'exception associé audit procédé pour référencer les objets de code d'opération Java ("objets jop") au lieu des références numériques pour les adresses des codes intermédiaires.

17. Procédé selon la revendication 13, dans lequel l'une desdites entrées de réserve constante globales (1203, 1204) est une entrée de référence de champ.

18. Procédé selon la revendication 1, dans lequel, afin de réagencer les éléments des deux classes utilitaires ou plus (200, 230), un module de conversion de contenu (920) valide lesdites deux classes utilitaires ou plus (200, 230) avant de cartographier lesdits éléments pour former ledit groupe de classes utilitaires unifiées (1200).

19. Procédé selon la revendication 18, dans lequel, afin de réagencer les éléments pour les deux classes utilitaires ou plus (200, 230), le module de conversion de contenu (920) convertit les classes utilitaires (200, 230) en un graphique d'objets de code d'opération Java ("objets jop") pour suivre l'endroit où les opérations de saut sont pointées avant la modification desdites classes utilitaires (200, 230) ; ajuste les références de réserve constante des numéros locaux aux numéros globaux en fonction dudit graphique ; et combine les classes utilitaires (200, 230) dans le groupe de classes utilitaires unifiées (1200).

20. Procédé selon la revendication 1, un serveur (110) récupère automatiquement les classes utilitaires (200, 230) d'un site Internet au nom d'un dispositif de traitement de données en réponse aux requêtes des classes utilitaires (200, 230) provenant du dispositif de traitement de données.

21. Procédé selon la revendication 1, dans lequel un serveur (110) récupère manuellement les classes utilitaires (200, 230) d'un site Internet au nom d'un dispositif de traitement de données en réponse aux requêtes par une organisation gérant le serveur (110).

22. Programme informatique contenant une séquence de code qui, lorsqu'elle est exécutée par une machine, amène ladite machine à réaliser le procédé selon l'une quelconque des revendications 1 à 21.
